# FASCICULE DE BREVET EUROPEEN

(11) **EP 3 997 755 B1**
(45) Date de publication et mention de la délivrance du brevet: **14.08.2024**
(21) Numéro de dépôt: 20734423.5
(22) Date de dépôt: 30.06.2020
(51) Int. Cl.: H01Q 1/32, H01Q 1/10, B60R 11/02, B62D 35/00

(54) **BECQUET ARRIERE DE VEHICULE AUTOMOBILE INSTRUMENTE**
INSTRUMENTIERTER HECKSPOILER FÜR KRAFTFAHRZEUG
INSTRUMENTED MOTOR VEHICLE REAR SPOILER

(30) Priorité: 11.07.2019 FR 1907818
(43) Date de publication de la demande: 18.05.2022
(73) Titulaire: Renault s.a.s, 92100 Boulogne Billancourt (FR)
(72) Inventeur: SEIGNEUR, Quentin, 78000 VERSAILLES (FR)
(74) Mandataire: Renault Group
(86) Numéro de dépôt international: PCT/EP2020/068338
(87) Numéro de publication internationale: WO 2021/004831

(56) Documents cités:
- WO-A1-2016/026750
- JP-A- 2015 100 011
- US-A1- 2006 262 018
- US-A1- 2008 030 414
- US-A1- 2017 279 181

## Description

L'objet de la présente invention se rapporte à un becquet arrière de véhicule automobile comprenant un dispositif de réception permettant de localiser la position du véhicule automobile qui l'inclut, et simultanément, de fournir sa vitesse et l'heure, grâce a un système de positionnement par satellites.

Le becquet arrière des véhicules automobiles est un élément de surface de leur carrosserie qui permet d'améliorer l'écoulement des filets d'air à la surface de cette carrosserie et à diminuer la traînée.

Il est bien connu d'installer un dispositif de réception dans le becquet arrière d'un véhicule automobile afin d'obtenir la meilleure réception possible des signaux provenant des satellites situés au droit du véhicule.

Le becquet arrière visé est celui qui s'étend dans le prolongement du pavillon du véhicule en surplombant le hayon arrière. Aucun élément métallique n'est alors interposé entre le dispositif de réception et les signaux de positionnement provenant des satellites, et partant, la lecture du positionnement n'est pas entachée d'erreur.

On pourra notamment se référer au document JP10329615A, lequel décrit un tel becquet arrière équipé d'une antenne de réception GPS, GPS pour « *Global Positioning System »* en langue anglaise. Le document WO 2016/026750 A1 divulgue un becquet arrière qui comprend une ou plusieurs antennes.

Le becquet arrière comprend une paroi externe oblongue moulée dans un matériau polymère, présentant un bord avant prolongeant de manière continue le pavillon et un bord arrière opposé longeant le hayon. La paroi externe oblongue s'étend de l'avant, vers l'arrière en formant un retour, lequel définit un logement interne. Aussi, ladite paroi externe oblongue est adaptée à venir s'étendre selon une direction transversale du véhicule automobile, sur une largeur égale à celle du pavillon.

A l'intérieur du logement interne, deux supports de fixation longitudinaux parallèles moulés avec la paroi s'étendent selon la direction transversale du véhicule et reçoivent un dispositif de réception de signaux. Ce dernier comprend une plaque de réception présentant deux bordures opposées et un boîtier de réception installé sur la plaque entre les bordures opposées. Le dispositif de réception est installé à l'intérieur du logement interne de manière à ce que les deux bordures opposées viennent respectivement prendre appui sur les deux supports de fixation où elles sont vissées.

La plaque de réception est alors maintenue en position fixe selon un plan horizontal. Le boîtier de réception est orienté vers le haut, tandis qu'un câble de liaison s'étend vers le bas pour rejoindre les organes de visualisation et de commande du véhicule automobile.

Le montage et le démontage d'un tel dispositif de réception est relativement long et par conséquent coûteux.

Aussi, un problème qui se pose et que vise à résoudre la présente invention est de fournir un becquet arrière permettant un montage plus économique du dispositif de réception.

Dans le but de résoudre ce problème, il est proposé un becquet arrière de véhicule automobile selon la revendication 1.

Ainsi, une caractéristique de l'invention réside dans la mise en oeuvre de glissières sur chacun des supports de fixation longitudinaux de manière à pouvoir installer aisément le dispositif de réception en engageant les deux bordures opposées de la plaque de réception respectivement dans les deux glissières. On profite ainsi de la plaque de réception qui joue un rôle dans la réception des signaux provenant des satellites pour la relier au support sans autre artifice, que les glissières. Comme on l'expliquera plus en détail dans la suite de la description, le profil des glissières et l'épaisseur de la plaque de transmission sont tels, que les deux bordures opposées sont engagées à force dans les glissières.

Avantageusement, les glissières desdits supports de fixation s'étendent en regard l'une de l'autre. Aussi, les deux bordures opposées de la plaque de réception s'étendent selon un même plan et elles sont orientées à l'opposé l'une de l'autre de manière à pouvoir être respectivement engagées dans les deux glissières en regard.

En outre, lesdites glissières comprennent, de manière particulièrement avantageuse, chacune une butée d'arrêt en translation desdites bordures opposées. Les glissières sont parallèles l'une à l'autre et leurs longueurs sont égales. Aussi, elles comportent chacune une butée d'arrêt à l'une de leurs extrémités. De la sorte, lorsque les bordures opposées de la plaque de réception sont engagées dans les glissières, à l'autre de leur extrémité, elles sont entraînées en translation jusqu'à venir contre les butées d'arrêt. De la sorte, la position relative de la plaque de réception et par conséquent du dispositif de réception par rapport aux glissières et plus largement au becquet arrière, est parfaitement déterminée.

Aussi, et selon un mode de mise en oeuvre de l'invention particulièrement avantageux, lesdits supports de fixation longitudinaux comprennent au moins une languette élastiquement déformable munie d'un ergot d'arrêt pour maintenir ladite plaque de réception en position fixe entre lesdites butées d'arrêt et ledit ergot. Ainsi, la languette élastiquement déformable munie de son ergot s'étend entre les deux glissières à l'opposé des butées d'arrêt. Lorsque les bordures opposées de la plaque de réception sont engagées dans les deux glissières en regard, la languette élastiquement déformable est écartée de sa position de repos entre les glissières. Après que les bordures opposées de la plaque prennent appui contre la butée d'arrêt, la languette élastiquement déformable retrouve sa position de repos, tandis que l'ergot vient s'étendre en avant du bord de la plaque de réception. La plaque de réception est alors prisonnière entre les butées d'arrêt et l'ergot comme on l'expliquera ci-après. En outre, le dispositif de réception peut être aisément désengagé des glissières en écartant la languette élastiquement déformable de sa position de repos et partant, en écartant l'ergot, puis en entraînant en translation la plaque de réception pour la désengager des glissières.

Préférentiellement, les supports de fixation comprennent deux languettes s'étendant parallèlement et respectivement au voisinage des glissières ; chacune des languettes étant équipée d'un ergot d'arrêt.

Selon un mode de réalisation de l'invention particulièrement avantageux, lesdites butées d'arrêt sont orientées vers ledit bord arrière, tandis que ledit ergot est orienté vers ledit bord avant.

Au surplus, le becquet arrière comprend en outre, de manière préférentielle, une ossature, et ladite paroi externe prend appui sur ladite ossature. L'ossature permet ainsi de maintenir la paroi externe en position fixe, laquelle paroi externe peut alors présenter une faible épaisseur.

Préférentiellement, ladite ossature et lesdits supports longitudinaux sont moulés ensemble d'une seule pièce dans un matériau polymère. Par exemple, l'ossature et les supports sont moulés en ABS, acronyme du polymère thermoplastique : acrylonitrile butadiène styrène.

En outre, les glissières desdits supports de fixation s'étendent selon une direction sensiblement perpendiculaire à ladite direction transversale. Autrement dit, les glissières s'étendent du bord avant vers le bord arrière et ainsi selon la direction longitudinale du véhicule automobile.

Par ailleurs, le becquet arrière comprend en outre, d'une part un autre logement interne délimité par ladite paroi externe oblongue et deux autres supports de fixation longitudinaux sensiblement parallèles situés à l'intérieur dudit autre logement interne et comprenant chacun une autre glissière, et d'autre part un autre dispositif de réception de signaux comprenant une autre plaque de réception présentant deux autres bordures opposées et un autre boîtier de réception installé sur ladite autre plaque entre lesdites autres bordures opposées, lesdites autres bordures opposées étant aptes à venir à coulissement dans lesdites autres glissières. De la sorte, le béquet arrière comporte deux dispositifs de réception, permettant d'assurer une plus grande fiabilité des informations sur la position du véhicule, sa vitesse et le temps.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique en perspective d'un élément de l'objet de l'invention ;
[Fig. 2] est une vue schématique partielle en perspective de l'arrière d'un véhicule automobile muni de l'objet de l'invention ;
[Fig. 3] est une vue schématique de dessus de l'objet de l'invention ;
[Fig. 4] est une vue schématique partielle en perspective d'un autre élément de l'objet de l'invention ; et,
[Fig. 5] est une vue schématique partielle de l'objet de la figure [Fig. 4] équipé de l'objet de la figure [Fig. 1], selon la flèche V illustrée sur la figure [Fig. 3].

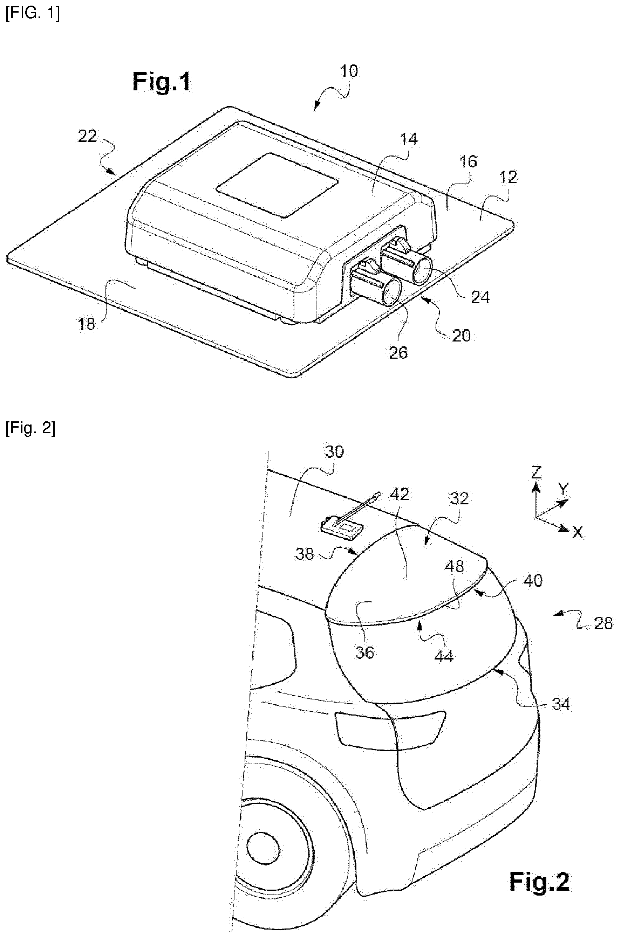

La Figure 1 montre un dispositif de réception de signaux 10 comprenant une plaque de réception 12 et un boîtier de réception 14. La plaque de réception 12 est de forme carrée et ses dimensions sont par exemple ici de 90 mm x 90 mm, tandis que son épaisseur est de 2 mm. La plaque de réception 12 peut présenter des épaisseurs plus importantes, mais aussi inférieures à 2 mm. Elle est réalisée en métal de manière à ce que les signaux électromagnétiques provenant de satellites artificiels puissent interagir avec elle. Elle présente deux bordures latérales opposées 16, 18 et un bord antérieur 20 opposé à un bord postérieur 22. Aussi, le boîtier de réception 14, d'une épaisseur voisine de 20 mm, est monté en position fixe sur la plaque de réception 12, au centre entre les deux bordures latérales opposées 16, 18. Le boîtier de réception 14 comporte deux connecteurs 24, 26 débouchant vers le bord antérieur 20, pour pouvoir le raccorder à des câbles coaxiaux s'étendant vers les instruments de visualisation et de commande d'un véhicule automobile.

Le dispositif de réception de signaux 10 est ici un « *patch GNSS* », autrement dit, un élément de réception permettant de recevoir des éléments d'information sur sa position, sa vitesse et l'heure, grâce a un ensemble de satellites évoluant autour de la terre ; « *GNSS* » correspondant aux initiales de l'expression anglaise « *Global Navigation Satellite System ».*

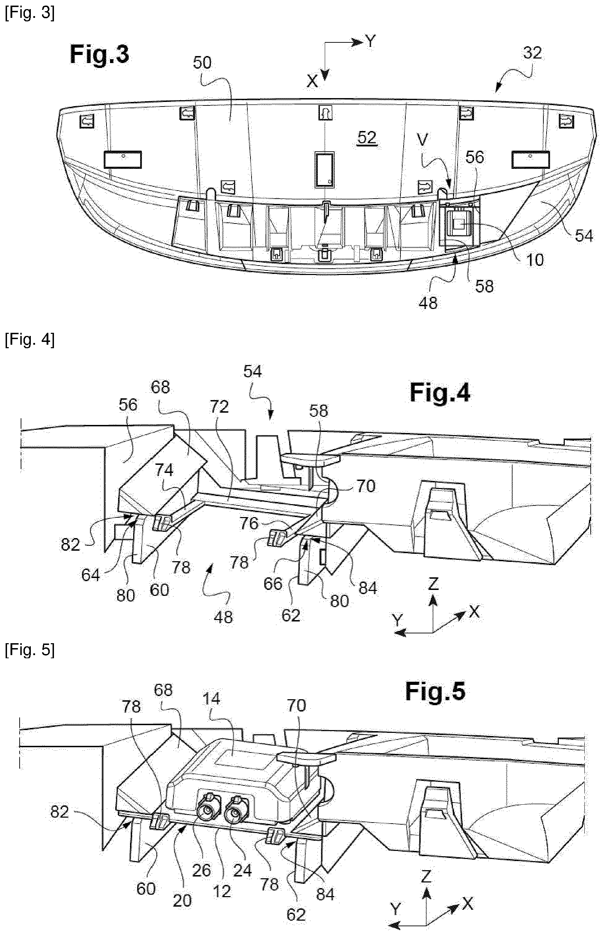

On se reportera maintenant sur la figure 2, montrant l'arrière d'un véhicule automobile 28 présentant un pavillon 30 prolongé vers l'arrière selon la composante X, d'un becquet arrière 32 venant en surplomb d'un hayon arrière 34. Ainsi, le béquet arrière 32 s'étend transversalement sur la largeur du pavillon 30 qu'il prolonge. Il comporte une paroi externe oblongue 36 laquelle présente un bord avant 38, venant bord à bord avec le pavillon 30, et un bord arrière 40 longeant le hayon 34. Aussi, la paroi externe oblongue 36 présente une partie formant extrados 42 opposée à une partie formant intrados 44 ; les deux parties 42, 44 étant délimitées l'une de l'autre par un bord de fuite 46. Ainsi, le dispositif de réception de signaux 10, décrit au droit de la figure [Fig. 1] est installé à l'intérieur d'un premier logement interne 48 du becquet arrière 32 que l'on trouve illustré en vue de dessus sur la figure [Fig. 3] dépourvu de sa paroi externe mais sur laquelle apparaît une ossature 50 sur laquelle elle s'appuie.

L'ossature 50 présente une partie avant 52 et une partie arrière 54 en décrochement par rapport à la partie avant 52. Le premier logement interne 48 est situé dans la partie arrière 54 entre deux cloisons latérales 56, 58.

On se reportera sur la figure [Fig. 4] montrant partiellement, selon la flèche V représentée sur la figure [Fig. 3], la partie arrière 54 et les deux cloisons latérales 56, 58 définissant alors le premier logement interne 48.

Ainsi, les deux cloisons latérales 56, 58 s'étendent longitudinalement parallèlement l'une à l'autre selon l'axe longitudinal X. Elles sont espacées d'une distance sensiblement supérieure à 90 mm. Aussi, elles sont munies respectivement de deux profilés méplats 60, 62 s'étendant parallèlement entre eux et présentant chacun une tranche d'appui 64, 66. Et elles sont également équipées de deux profilés prismatiques 68, 70 s'étendant en surplomb des tranches d'appui 64, 66 à une distance de 2 mm. Les deux profilés méplats 60, 62 sont ici reliés par un pont 72. Et de ce pont 72 s'étendent deux languettes flexibles 74, 76 respectivement parallèles et situées au voisinage des deux profilés méplats 60, 62 sensiblement en dessous du niveau de leur tranche d'appui 64, 66. Les languettes flexibles 74, 76 s'étendent selon une composante négative de l'axe longitudinal X et elles se terminent chacune par un ergot d'arrêt 78 s'étendant en saillie au-dessus du niveau de la tranche d'appui 64, 66 des profilés méplats 60, 62, lorsque les languettes flexibles 74, 76 sont au repos. En outre, des ergots d'arrêt 78 s'étendent au droit des extrémités avant 80 des deux profilés méplats 60, 62. De la sorte, les deux tranches d'appui 64, 66 recouvertes respectivement et à distance de leurs deux profilés prismatiques 68, 70 définissent alors deux glissières en regard l'une de l'autre 82, 84.

En outre, et de façon particulièrement avantageuse, les deux profilés méplats 60, 62, les deux profilés prismatiques 68, 70, le pont 72 et les deux languettes flexibles 74, 76 terminées respectivement par leur ergot d'arrêt 78 sont moulés d'une seule pièce avec la partie arrière 54 et la partie avant 52 sur les deux cloisons latérales 56, 58. L'ensemble est par exemple moulé en ABS.

Ainsi, les languettes 74, 76 présentent une certaine flexibilité, et elles peuvent être écartées à l'opposé des deux profilés prismatiques 68, 70 de manière à pouvoir engager le bord postérieur 22 et les deux bordures opposées 16, 18 de la plaque de réception 12 dans les deux glissières respectivement 82, 84 entre les tranches d'appui 64, 66 et les profilés prismatiques 68, 70, comme illustré sur la figure [Fig. 5].

Puisque les deux cloisons latérales 56, 58 sont écartées l'une de l'autre selon l'axe transversal Y d'une valeur correspondant à la largeur de la plaque de réception et que les profilés prismatiques 68, 70 sont espacés des tranches d'appui 64, 66 selon l'axe vertical Z d'une distance égale à l'épaisseur de la plaque de réception 12, et qu'au surplus tous ces éléments sont réalisés en matériau polymère, les deux bordures latérales opposées 16, 18 de la plaque de réception 12 peuvent être entraînées à force entre ces éléments, tandis que les matériaux polymères se déforment sensiblement. Aussi, à l'extrémité des tranches d'appui 64, 66, à l'opposé des extrémités avant 80, des butées d'arrêt non représentées permettent de stopper la plaque de réception 12 lorsque le bord postérieur 22 rencontre précisément les butées d'arrêt. Selon la direction longitudinale X les ergots d'arrêt 78 sont situés à une distance des butées d'arrêt sensiblement supérieur à la longueur de la plaque de réception 12, soit 90 mm. De la sorte, lorsque le bord postérieur 22 rencontre les butées d'arrêt, les languettes 74, 76 reprennent leur position d'équilibre, tandis que les ergots 78 viennent s'étendre en regard du bord antérieur 20 de la plaque de réception 12 de manière à l'emprisonner. De la sorte, la plaque de réception 12 et le boîtier de réception 14 qu'elle supporte sont parfaitement maintenus en position fixe par rapport à l'ossature 50 et au becquet arrière 32 plus généralement.

Ensuite, les câbles coaxiaux des instruments de visualisation et de commande peuvent être raccordés aux connecteurs 24, 26.

Aussi, et à l'inverse, la plaque de réception 12 peut aisément être extraite des glissières 82, 84 en exercent un effort sur les ergots 78, selon la direction verticale Z et partant, en écartant les languettes 74, 76 de la plaque de réception 12. Le bord antérieur 20 de la plaque de réception 12 échappe alors à la portée des ergots 78. La plaque de réception 12 peut alors être entraînée à coulissement pour être extraite.

Ainsi, le dispositif de réception 10 est tout aussi aisé à installer qu'à extraire.

Par ailleurs, selon un autre mode de réalisation de l'invention non représenté, le becquet arrière comprend en outre un second logement interne, situé par exemple à l'opposé du premier par rapport à un plan médian du becquet arrière. Aussi, ce dernier comprend deux seconds supports de fixation longitudinaux sensiblement parallèles situés à l'intérieur du second logement interne avec chacun une seconde glissière. Et un second dispositif de réception de signaux comprenant une seconde plaque de réception présentant deux seconde bordures opposées et un second boîtier de réception installé sur la seconde plaque entre les secondes bordures opposées. Aussi, les secondes bordures opposées sont aptes à venir à coulissement dans les secondes glissières.

## Revendications

1. Becquet arrière de véhicule automobile comprenant :
- une paroi externe oblongue (36) présentant un bord avant (38) et un bord arrière (40) opposé, et un logement interne (48) délimité par ladite paroi externe oblongue (36), ladite paroi externe oblongue (36) étant adapté à venir s'étendre selon une direction transversale d'un véhicule automobile ;
- deux supports de fixation longitudinaux (60, 62, 68, 70) sensiblement parallèles situés à l'intérieur dudit logement interne (48) ; et,
- un dispositif de réception de signaux (10) comprenant une plaque de réception (12) présentant deux bordures opposées (16, 18) et un boîtier de réception (14) installé sur ladite plaque (12) entre lesdites bordures opposées (16, 18), lesdites deux bordures opposées (16, 18) étant adaptées à être solidarisées respectivement auxdits deux supports de fixation (60, 62, 68, 70) ;
**caractérisé en ce que** lesdits supports de fixation longitudinaux (60, 62, 68, 70) comprennent chacun une glissière (82, 84), pour recevoir respectivement à coulissement lesdites bordures opposées (16, 18) de ladite plaque de réception (12).

2. Becquet arrière selon la revendication 1, **caractérisé en ce que** les glissières (82, 84) desdits supports de fixation s'étendent en regard l'une de l'autre.

3. Becquet arrière selon la revendication 1 ou 2, **caractérisé en ce que** lesdites glissières (82, 84) comprennent chacune une butée d'arrêt en translation desdites bordures opposées (16, 18).

4. Becquet arrière selon la revendication 3, **caractérisé en ce que** lesdits supports de fixation longitudinaux (60, 62, 68, 70) comprennent au moins une languette (74, 76) élastiquement déformable munie d'un ergot d'arrêt (78) pour maintenir ladite plaque de réception (12) en position fixe entre lesdites butées d'arrêt et ledit ergot (78).

5. Becquet arrière selon la revendication 4, **caractérisé en ce que** lesdites butées d'arrêt sont orientées vers ledit bord arrière (40), tandis que ledit ergot (78) est orienté vers ledit bord avant (38).

6. Becquet arrière selon l'une quelconque des revendications 1 à 4, **caractérisé en ce qu'**il comprend en outre une ossature (50), et **en ce que** ladite paroi externe (36) prend appui sur ladite ossature (50).

7. Becquet arrière selon la revendication 5, **caractérisé en ce que** ladite ossature (50) et lesdits supports longitudinaux (60, 62, 68, 70) sont moulés ensemble d'une seule pièce dans un matériau polymère.

8. Becquet arrière selon l'une quelconque des revendications 1 à 7, **caractérisé en ce que** les glissières (82, 84) desdits supports de fixation s'étendent selon une direction sensiblement perpendiculaire à ladite direction transversale Y.

9. Becquet arrière selon l'une quelconque des revendications 1 à 8, **caractérisé en ce qu'**il comprend en outre, d'une part un autre logement interne délimité par ladite paroi externe oblongue et deux autres supports de fixation longitudinaux sensiblement parallèles situés à l'intérieur dudit autre logement interne et comprenant chacun une autre glissière, et d'autre part un autre dispositif de réception de signaux comprenant une autre plaque de réception présentant deux autres bordures opposées et un autre boîtier de réception installé sur ladite autre plaque entre lesdites autres bordures opposées, lesdites autres bordures opposées étant aptes à venir à coulissement dans lesdites autres glissières.

## Patentansprüche

1. Heckspoiler eines Kraftfahrzeugs, umfassend:
- eine längliche Außenwand (36), die eine Vorderkante (38) und eine gegenüberliegende Hinterkante (40) aufweist, und ein Innengehäuse (48), das durch die längliche Außenwand (36) begrenzt ist, wobei sich die längliche Außenwand (36) in einer Querrichtung eines Kraftfahrzeugs erstrecken kann;
- zwei im Wesentlichen parallele längsgerichtete Befestigungsträger (60, 62, 68, 70), die sich im Inneren des Innengehäuses (48) befinden; und
- eine Signalempfangsvorrichtung (10), die eine Empfangsplatte (12) mit zwei gegenüberliegenden Rändern (16, 18) und ein auf der Platte (12) zwischen den gegenüberliegenden Rändern (16, 18) installiertes Empfangsgehäuse (14) umfasst, wobei die beiden gegenüberliegenden Ränder (16, 18) jeweils mit den beiden Befestigungsträgern (60, 62, 68, 70) verbunden sein können;
**dadurch gekennzeichnet, dass** die längsgerichteten Befestigungsträger (60, 62, 68, 70) jeweils eine Schiene (82, 84) umfassen, um jeweils die gegenüberliegenden Ränder (16, 18) der Empfangsplatte (12) gleitend aufzunehmen.

2. Heckspoiler nach Anspruch 1, **dadurch gekennzeichnet, dass** sich die Schienen (82, 84) der Befestigungsträger einander gegenüberliegend erstrecken.

3. Heckspoiler nach Anspruch 1 oder 2, **dadurch gekennzeichnet, dass** die Schienen (82, 84) jeweils einen translatorischen Rastanschlag der gegenüberliegenden Ränder (16, 18) umfassen.

4. Heckspoiler nach Anspruch 3, **dadurch gekennzeichnet, dass** die längsgerichteten Befestigungsträger (60, 62, 68, 70) jeweils eine elastisch verformbare Zunge (74, 76) umfassen, die mit einer Rastnase (78) versehen ist, um die Empfangsplatte (12) in einer festen Position zwischen den Rastanschlägen und der Nase (78) zu halten.

5. Heckspoiler nach Anspruch 4, **dadurch gekennzeichnet, dass** die Rastanschläge zur Hinterkante (40) hin ausgerichtet sind, während die Nase (78) zur Vorderkante (38) hin ausgerichtet ist.

6. Heckspoiler nach einem der Ansprüche 1 bis 4, **dadurch gekennzeichnet, dass** er ferner ein Gerüst (50) umfasst und dass die Außenwand (36) auf dem Gerüst (50) aufliegt.

7. Heckspoiler nach Anspruch 5, **dadurch gekennzeichnet, dass** das Gerüst (50) und die längsverlaufenden Träger (60, 62, 68, 70) einstückig aus einem Polymermaterial geformt sind.

8. Heckspoiler nach einem der Ansprüche 1 bis 7, **dadurch gekennzeichnet, dass** sich die Schienen (82, 84) der Befestigungsträger in einer zur Querrichtung Y im Wesentlichen senkrechten Richtung erstrecken.

9. Heckspoiler nach einem der Ansprüche 1 bis 8, **dadurch gekennzeichnet, dass** er ferner Folgendes umfasst: einerseits ein weiteres Innengehäuse, das durch die längliche Außenwand und zwei weitere im Wesentlichen parallele längsgerichtete Befestigungsträger begrenzt wird, die sich im Inneren des Innengehäuses erstrecken und jeweils eine weitere Schiene umfassen, und andererseits eine weitere Signalempfangsvorrichtung, die eine weitere Empfangsplatte mit zwei weiteren gegenüberliegenden Rändern und ein auf der weiteren Platte zwischen den weiteren gegenüberliegenden Rändern installiertes weiteres Empfangsgehäuse aufweist, wobei die weiteren gegenüberliegenden Ränder in den weiteren Schienen gleiten können.

## Claims

1. Motor vehicle rear spoiler comprising:
- an oblong outer wall (36) having a front edge (38) and an opposite rear edge (40), and an internal housing (48) delimited by said oblong outer wall (36), said oblong outer wall (36) being designed to extend in a transverse direction of a motor vehicle;
- two substantially parallel longitudinal fixing supports (60, 62, 68, 70) situated inside said internal housing (48); and
- a signal reception device (10) comprising a reception plate (12) having two opposite borders (16, 18) and a reception unit (14) installed on said plate (12) between said opposite borders (16, 18), said two opposite borders (16, 18) being designed to be secured respectively to said two fixing supports (60, 62, 68, 70) ;
**characterized in that** said longitudinal fixing supports (60, 62, 68, 70) each comprise a runner (82, 84), for respectively slidingly receiving said opposite borders (16, 18) of said reception plate (12).

2. Rear spoiler according to Claim 1, **characterized in that** the runners (82, 84) of said fixing supports extend opposite one another.

3. Rear spoiler according to Claim 1 or 2, **characterized in that** said runners (82, 84) each comprise an abutment for stopping translation of said opposite borders (16, 18).

4. Rear spoiler according to Claim 3, **characterized in that** said longitudinal fixing supports (60, 62, 68, 70) comprise at least one elastically deformable tongue (74, 76) provided with a stop lug (78) for holding said reception plate (12) in position fixed between said stop abutments and said lug (78).

5. Rear spoiler according to Claim 4, **characterized in that** said stop abutments are oriented toward said rear edge (40), whereas said lug (78) is oriented toward said front edge (38).

6. Rear spoiler as claimed any one of Claims 1 to 4, **characterized in that** it further comprises a framework (50), and **in that** said outer wall (36) bears on said framework (50) .

7. Rear spoiler according to Claim 5, **characterized in that** said framework (50) and said longitudinal supports (60, 62, 68, 70) are moulded together in a single piece in a polymer material.

8. Rear spoiler according to any one of Claims 1 to 7, **characterized in that** the runners (82, 84) of said fixing supports extend in a direction substantially at right angles to said transverse direction Y.

9. Rear spoiler according to any one of Claims 1 to 8, **characterized in that** it further comprises, on the one hand, another internal housing delimited by said oblong outer wall and two other substantially parallel longitudinal fixing supports situated inside said other internal housing and each comprising another runner, and, on the other hand, another signal reception device comprising another reception plate having two other opposite borders and another reception unit installed on said other plate between said other opposite borders, said other opposite borders being able to slide in said other runners.
